# EUROPEAN PATENT APPLICATION

(11) **EP 4 404 487 A1**
(43) Date of publication of application: **24.07.2024**
(21) Application number: 22869305.7
(22) Date of filing: 15.09.2022
(51) Int. Cl.: H04L 1/22, H04L 49/113

(54) **INTELLIGENT VEHICLE COMMUNICATION SYSTEM**

(30) Priority: 16.09.2021 CN 202122251853 U
(71) Applicant: Beijing CHJ Information Technology Co., Ltd., Beijing 101399 (CN)
(72) Inventor: TAN, Longyuan, Beijing 101399 (CN)
(74) Representative: Maiwald GmbH
(86) International application number: PCT/CN2022/118943
(87) International publication number: WO 2023/040936

(57) **Abstract**

The present disclosure relates to an intelligent vehicle communication system, comprising: a first controller, a second controller, and a communications network. The communications network comprises a first communication link and a second communication link. A first end of the first communication link is in communication connection with a first end of the first controller. A second end of the first communication link is in communication connection with a first end of the second controller. A first end of the second communication link is in communication connection with a second end of the first controller. A second end of the second communication link is in communication connection with a second end of the second controller. The first controller and the second controller perform data transmission by means of the first communication link and/or the second communication link.

## Description

### CROSS REFERENCE TO RELATED APPLICATIONS

This application is based on and claims priority to Chinese patent application No. 202122251853.0, filed on September 16, 2021, the entire contents of which are incorporated herein by reference.

### TECHNICAL FIELD

The disclosure relates to a field of automotive communication technology, in particular to an intelligent vehicle communication system.

### BACKGROUND

With the rapid development of automobile intelligence, the number of unit controllers inside the vehicle has increased dramatically, and the complexity of computing data has been further increased, which puts forward higher requirements for the communication method among the controllers of the vehicle and the topological network structure.

The existing communication network for data transmission between the controllers in the intelligent vehicle uses a single communication link. Once the communication link is failed, end-to-end data transmission cannot be realized reliably.

### SUMMARY

In order to solve the above technical problems or at least partially solve the above technical problems, the disclosure provides an intelligent vehicle communication system, to realize multi-channel data transmission and improves the reliability of data transmission.

The embodiments of the disclosure provide an intelligent vehicle communication system. The system includes: a first controller, a second controller, and a communication network; in which
the communication network includes a first communication link and a second communication link, the first communication link connects the first controller and the second controller, and the second communication link connects the first controller and the second controller; and
the first controller and the second controller perform data transmission through the first communication link and/or the second communication link.

Optionally, the communication network at least includes a first switch, a second switch, a third switch and a fourth switch;
in the first communication link, a first end of the first controller is communicatively connected to the first switch, the first switch is communicatively connected to the second switch, the second switch is communicatively connected to the fourth switch, the fourth switch is communicatively connected to the third switch, and the second switch is communicatively connected to a first end of the second controller; and
in the second communication link, a second end of the first controller is communicatively connected to the third switch, the second switch is communicatively connected to the first switch, the first switch is communicatively connected to the third switch, the third switch is communicatively connected to the fourth switch, and the fourth switch is communicatively connected to a second end of the second controller.

Optionally, the communication network further includes a fifth switch;
in the first communication link, the fourth switch is communicatively connected to the third switch through the fifth switch; and
in the second communication link, the second switch is communicatively connected to the first switch through the fifth switch.

Optionally, the system further includes a third controller; and
the communication network further includes a third communication link and a fourth communication link, the third communication link connects the second controller and the third controller, and the fourth communication link connects the second controller and the third controller.

Optionally, the communication network at least includes the first switch, the second switch, the third switch, the fourth switch, the fifth switch and a sixth switch;
in the first communication link, a first end of the first controller is communicatively connected to the first switch, the third switch is communicatively connected to the first switch, the first switch is communicatively connected to the second switch, the second switch is communicatively connected to the fourth switch, and the second switch is communicatively connected to a first end of the second controller;
in the second communication link, a second end of the first controller is communicatively connected to the third switch, the first switch is communicatively connected to the third switch, the third switch is communicatively connected to the fourth switch, the fourth switch is communicatively connected to the second switch, and the fourth switch is communicatively connected to a second end of the second controller;
in the third communication link, the first end of the second controller is communicatively connected to the second switch, the second switch is communicatively connected to the fifth switch, the fifth switch is communicatively connected to the sixth switch, and the fifth switch is communicatively connected to a first end of the third controller; and
in the fourth communication link, the second end of the second controller is communicatively connected to the fourth switch, the fourth switch is communicatively connected to the sixth switch, the sixth switch is communicatively connected to the fifth switch, and the sixth switch is communicatively connected to a second end of the third controller.

Optionally, the first controller includes at least a first Ethernet interface and a second Ethernet interface, and the second controller includes at least a first Ethernet interface and a second Ethernet interface;
two ends of the first communication link are electrically connected to the first Ethernet interface of the first controller and the first Ethernet interface of the second controller, respectively; and
two ends of the second communication link are electrically connected to the second Ethernet interface of the first controller and the second Ethernet interface of the second controller, respectively.

Optionally, the first controller includes at least a first Ethernet interface and a second Ethernet interface, the second controller includes at least a first Ethernet interface and a second Ethernet interface, and the third controller includes at least a first Ethernet interface and a second Ethernet interface;
two ends of the first communication link are electrically connected to the first Ethernet interface of the first controller and the first Ethernet interface of the second controller, respectively;
two ends of the second communication link are electrically connected to the second Ethernet interface of the first controller and the second Ethernet interface of the second controller, respectively;
two ends of the third communication link are electrically connected to the first Ethernet interface of the second controller and the first Ethernet interface of the third controller, respectively; and
two ends of the fourth communication link are electrically connected to the second Ethernet interface of the second controller and the second Ethernet interface of the third controller, respectively.

Optionally, the communication network is isolated by a virtual local area network to form the first communication link and the second communication link.

Optionally, the communication network implements data transmission between the first controller and the second controller based on a redundant link network adaptation protocol.

The technical solutions provided by the embodiments of the disclosure have the following advantages over the related art.

The embodiments of the disclosure provide an intelligent vehicle communication system. The intelligent vehicle communication system includes a first controller, a second controller, and a communication network. The communication network includes a first communication link and a second communication link. When the first communication link in the communication network is failed, the first controller may send a source message to the second controller through the second communication link. Alternatively, when the second communication link in the communication network is failed, the first controller sends the source message to the second controller through the first communication link. Therefore, multi-channel data transmission between the first controller and the second controller is realized, and the reliability of data transmission is improved.

### BRIEF DESCRIPTION OF THE DRAWINGS

The accompanying drawings herein are incorporated into and constitute a part of the specification, illustrate embodiments consistent with the disclosure, and are used in combination with the specification to explain the principles of the disclosure.

In order to more clearly illustrate the technical solutions in the embodiments or in the related art of the disclosure, the accompanying drawings to be used in the description of the embodiments or the related art will be briefly described below. Obviously, those skilled in the art can obtain other accompanying drawings from these accompanying drawings without inventive works.
FIG. 1 is a schematic diagram of an intelligent vehicle communication system according to an embodiment of the disclosure.
FIG. 2 is a schematic diagram of an intelligent vehicle communication system according to another embodiment of the disclosure.
FIG. 3 is a schematic diagram of an intelligent vehicle communication system according to another embodiment of the disclosure.
FIG. 4 is a schematic diagram of an intelligent vehicle communication system according to another embodiment of the disclosure.
FIG. 5 is a schematic diagram of an intelligent vehicle communication system according to another embodiment of the disclosure.

The figures includes: Node_A, a first controller; Node_B, a second controller; Node_C, a third controller; 10, a communication network; 11, a first communication link; 12, a second communication link; 13, a third communication link; 14, a fourth communication link; Switch1, a first switch; Switch2, a second switch; Switch3, a third switch; Switch4, a fourth switch; Switch5, a fifth switch; Switch6, a sixth switch.

### DETAILED DESCRIPTION

In order to clearly understand the above purposes, features and advantages of the disclosure, the embodiments of the disclosure will be further described below. It should be noted that the embodiments of the disclosure and features in the embodiments may be combined with each other without conflict.

Many specific details are set forth in the following description in order to facilitate a full understanding of the disclosure, but the disclosure may also be implemented in other ways different from those described herein. Obviously, the embodiments in the disclosure are only a part of the embodiments of the disclosure and not all of them.

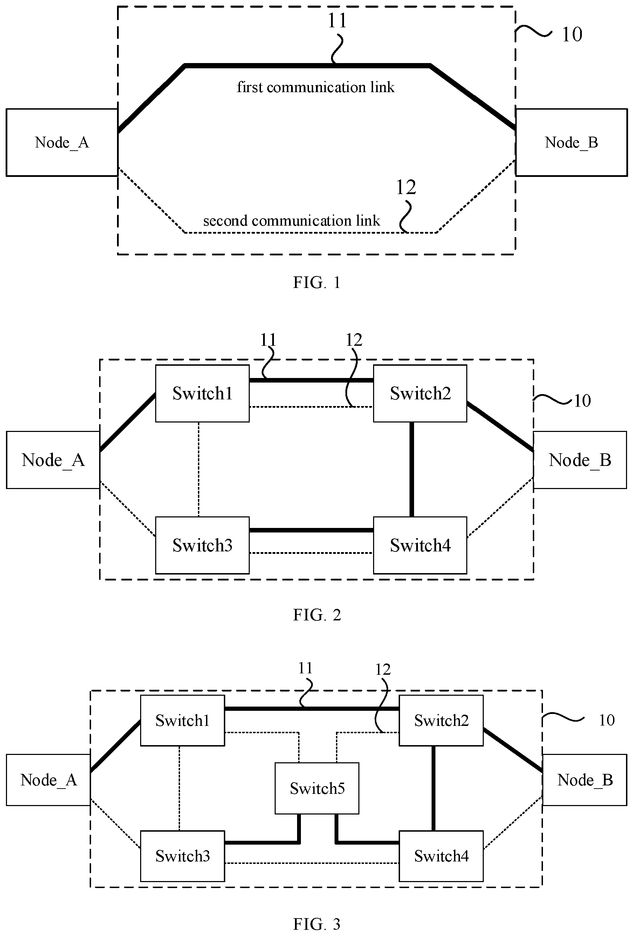

FIG. 1 is a schematic diagram of an intelligent vehicle communication system according to an embodiment of the disclosure. As illustrated in FIG. 1, the intelligent vehicle communication system includes: a first controller Node_A, a second controller Node_B, and a communication network 10. The communication network 10 includes: a first communication link 11 and a second communication link 12. The first communication link 11 connects the first controller Node_A and the second controller Node_B. The second communication link 12 connects the first controller Node_A and the second controller Node_B. The first controller Node_A and the second controller Node_B perform data transmission through the first communication link 11 and/or the second communication link 12.

As illustrated in FIG. 1, the first controller is Node_A and the second controller is Node_B. The first controller Node_A and the second controller Node_B include a steering wheel controller, a driving motor controller, a first steering motor controller, a second steering motor controller, a first brake actuator controller, a second brake actuator controller, a battery management unit controller, and a display controller in an intelligent vehicle. Specific types of the first controller Node_A and the second controller Node_B are not limit in the embodiments of the disclosure. If the first controller Node_A is the driving motor controller, and the second controller Node_B is the first steering motor controller, the first steering motor controller receives a source message sent by the driving motor controller. That is, the first controller Node_A sends the source message to the second controller Node_B. If the first controller Node_A is the first steering motor controller and the second controller Node_B is the driving motor controller, the first steering motor controller receives the source message sent by the driving motor controller. That is, the second controller Node_B sends the source message to the first controller Node_A. That is, the first controller Node_A and the second controller Node_B provided by the embodiments of the disclosure are relative to each other. The first controller Node_A may act as a transmitting controller, and the second controller Node_B may act as a receiving controller. Alternatively, the first controller Node_A may act as a receiving controller and the second controller Node_B may act as a transmitting controller.

The communication network 10 includes the first communication link 11 and the second communication link 12. A first end of the first communication link 11 is communicatively connected to a first end of the first controller Node_A. A second end of the first communication link 11 is communicatively connected to a first end of the second controller Node_B. A first end of the second communication link 12 is communicatively connected to a second end of the first controller Node_B. A second end of the second communication link 12 is communicatively connected to a second end of the second controller Node_B. When data transmission is performed between the first controller Node_A and the second controller Node_B, specifically, when the first controller Node_A sends the source message to the second controller Node_B, the first controller Node_A sends the source message to the second controller Node_B through the first communication link 11, and/or the first controller Node_A sends the source message to the second controller Node_B through the second communication link 12. The second controller Node_B receives the source message sent by the first controller Node_A through the first communication link 11, and/or the second controller Node_B receives the source message sent by the first controller Node_A through the second communication link 12. Therefore, when the first communication link 11 in the communication network 10 is failed, the first controller Node_A may send the source message to the second controller Node B through the second communication link 12. Alternatively, when the second communication link 12 in the communication network 10 is failed, the first controller Node_A sends the source message to the second controller Node_B through the first communication link 11.

The embodiments of the disclosure provide an intelligent vehicle communication system. The intelligent vehicle communication system includes: a first controller, a second controller, and a communication network. The communication network includes: a first communication link and a second communication link. When the first communication link in the communication network is failed, the first controller may send the source message to the second controller through the second communication link. Alternatively, when the second communication link in the communication network is failed, the first controller sends the source message to the second controller through the first communication link, to realize multi-channel data transmission between the first controller and the second controller, thereby improving the reliability of data transmission.

FIG. 2 is a schematic diagram of an intelligent vehicle communication system according to another embodiment of the disclosure. This embodiment is based on the above embodiment provided in FIG. 1. As illustrated in FIG. 2, the communication network at least includes: a first switch Switch1, a second switch Switch2, a third switch Switch3, and a fourth switch Switch4. In the first communication link 11, a first end of the first controller Node_A is communicatively connected to the first switch Switch1. The first switch Switch1 is communicatively connected to the second switch Switch2. The second switch Switch2 is communicatively connected to the fourth switch Switch4. The fourth switch Switch4 is communicatively connected to the third switch Switch3. A first end of the second controller Node_B is communicatively connected to the second switch Switch2. In the second communication link 12, a second end of the first controller Node_A is communicatively connected to the third switch Switch3. The second switch Switch2 is communicatively connected to the first switch Switch1. The first switch Switch1 is communicatively connected to the third switch Switch3. The third switch Switch3 is communicatively connected to the fourth switch Switch4. A second end of the second controller Node_B is communicatively connected to the fourth switch Switch4.

As illustrated in FIG. 2, in the first communication link 11, the first switch Switch1 is communicatively connected to the second switch Switch2, the second switch Switch2 is communicatively connected to the fourth switch Switch4, the fourth switch Switch4 is communicatively connected to the third switch Switch3. In the second communication link 12, the second switch Switch2 is communicatively connected to the first switch Switch1, the first switch Switch1 is communicatively connected to the third switch Switch3, and the third switch Switch3 is communicatively connected to the fourth switch Switch4. The switches in the first communication link 11 and the second communication link 12 are connected sequentially, so that the source message sent by a master control unit of the intelligent vehicle can reach each switch in the first communication link 11 and the second communication link 12.

After the first communication link 11 and the second communication link 12 between the second controller Node_B and the first controller Node_A are established, when switch nodes (i.e., the first switch Switch1, the second switch Switch2, the third switch Switch3, and the fourth switch Switch4) in the first communication link 11 operate normally, and sub-links in the first communication link 11 (i.e., a connecting path of two switches that are communicatively connected, a connecting path between the first switch Switch1 and the first controller Node_A, and a connecting path between the second controller Node_B and the second switch Switch2) operate normally, the second controller Node_B receives the source message sent by the first controller Node_A through the first communication link 11. When the switch nodes(i.e., the first switch Switch1, the second switch Switch2, the third switch Switch3, and the fourth switch Switch4) in the second communication link 12 operate normally, and the sub-links in the second communication link 12 (i.e., a connecting path of two switches that are communicatively connected, a connecting path between the third switch Switch3 and the first controller Node_A, and a connecting path between the second controller Node_B and the fourth switch Switch4) operate normally, the second controller Node_B receives the source message sent by the first controller Node_A through the second communication link 12. In addition, since the first switch Switch1, the second switch Switch2, the third switch Switch3, and the fourth switch Switch4 in the first communication link 11 and the second communication link 12 are connected in different ways, if any of the switch nodes in the first communication link 11 is failed, and/or any sub-link in the first communication link 11 is failed, the second controller Node_B may receive the source message sent by the first controller Node_A through the second communication link 12. If any of the switch nodes in the second communication link 12 is failed, and/or any sub-link in the second communication link 12 is failed, the second controller Node_B may receive the source message sent by the first controller Node_A through the first communication link 11, which realizes reliable data transmission between the second controller Node_B and the first controller Node_A.

FIG. 3 is a schematic diagram of an intelligent vehicle communication system according to another embodiment of the disclosure. This embodiment is based on the embodiment provided in FIG. 2. As illustrated in FIG. 3, the communication network 10 further includes a fifth switch Switch5. In the first communication link 11, the fourth switch Switch4 is communicatively connected to the third switch Switch3 through the fifth switch Switch5. In the second communication link 12, the second switch Switch2 is communicatively connected to the first switch Switch 1 through the fifth switch Switch5.

As illustrated in FIG. 3, the communication network 10 further includes the fifth switch Switch5. In the first communication link 11, the first end of the first controller Node_A is communicatively connected to the first switch Switch1. The first switch Switch1 is communicatively connected to the second switch Switch2. The second switch Switch2 is communicatively connected to the fourth switch Switch4. The fourth switch Switch4 is communicatively connected to the fifth switch Switch5. The fifth switch Switch5 is communicatively connected to the third switch Switch3. The second switch Switch2 is communicatively connected to the first end of the second controller Node_B. In the second communication link 12, the second end of the first controller Node_A is communicatively connected to the third switch Switch3. The second switch Switch2 is communicatively connected to the fifth switch Switch5. The fifth switch Switch5 is communicatively connected to the first switch Switch1. The first switch Switch1 is communicatively connected to the third switch Switch3. The third switch Switch3 is communicatively connected to the fourth switch Switch4. The fourth switch Switch4 is communicatively connected to the second end of the second controller Node_B.

It should be noted that FIG. 2 illustrates that the communication network 10 includes the first switch Switch 1, the second switch Switch2, the third switch Switch3, and the fourth switch Switch4. In other possible implementations, the communication network 10 may include the first switch Switch 1, the second switch Switch2, the third switch Switch3, the fourth switch Switch4, and the fifth switch Switch5. When there are 5 switches in the communication network, the communication network 10 is connected to the first controller Node_A and the second controller Node_B in the way shown in FIG. 3. In addition, the number of switches in the communication network 10 may be other numbers, which is not specifically limited in the embodiments of the disclosure.

In the intelligent vehicle communication system provided by the embodiments of the disclosure, when the communication network includes 5 switches, reliable transmission of the source message in the communication network including 5 switches is realized by configuring the connection method of the first controller and the second controller to the first switch, the second switch, the third switch, the fourth switch, and the fifth switch in the communication network.

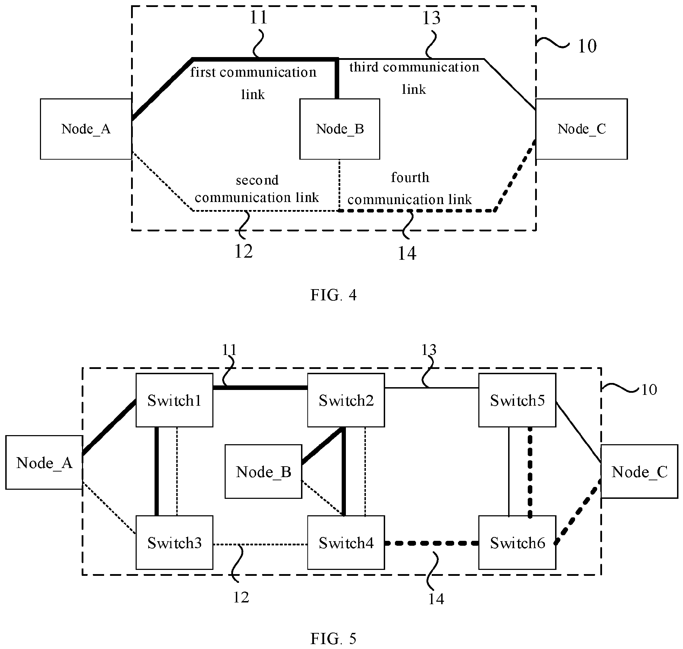

FIG. 4 is a schematic diagram of an intelligent vehicle communication system according to another embodiment of the disclosure. As illustrated in FIG. 4, the intelligent vehicle communication system further includes a third controller Node_C. The communication network 10 further includes a third communication link 13 and a fourth communication link 14. The third communication link 13 connects the second controller Node_B and the third controller Node_C, and the fourth communication link 14 connects the second controller Node_B and the third controller Node_C.

The specific type of the third controller Node_C may be selected from a steering wheel controller, a driving motor controller, a first steering motor controller, a second steering motor controller, a first brake actuator controller, a second brake actuator controller, a battery management unit controller, and a display controller. The third controller Node_C may be selected in association with the first controller Node_A and the second controller Node_B, to enable information transfer between them.

Due to an interdependent relation among the controllers in the intelligent vehicle, for example, the driving motor controller sends the source message to the first steering motor controller, and the first steering motor controller, after receiving the source message sent by the driving motor controller, acts according to parsed source message. In addition, the first steering motor controller sends the received source message sent by the driving motor controller to the display controller. After receiving the source message sent by the first steering motor controller, the display controller acts according to the parsed source message. At this time, the first controller is the driving motor controller, the second controller is the first steering motor controller, and the third controller is the display controller. As illustrated in FIG. 4, the first controller is Node_A, the second controller is Node_B, and the third controller is Node_C, the third communication link 13 and the fourth communication link 14 are established between the second controller Node_B and the third controller as Node_C.

It should be noted that in FIG. 4, the second controller Node_B serves as a connection controller between the first controller Node_A and the third controller Node_C. There may be an overlapped sub-link between the first communication link 11 and the second communication link 12 which are established between the second controller Node_B and the first controller Node_A and the third communication link 13 and the fourth communication link 14 which are established between the second controller Node_B and the third controller Node_C.

The embodiments of the disclosure provide the intelligent vehicle communication system. When the communication system includes the first controller, the second controller and the third controller, by establishing the communication network among the first controller, the second controller and the third controller, reliable data transmission between the three controllers in the intelligent vehicle communication system is realized.

FIG. 5 is a schematic diagram of an intelligent vehicle communication system according to another embodiment of the disclosure. This embodiment is based on the embodiment in FIG. 4. As illustrated in FIG. 5, the communication network at least includes the first switch Switch1, the second switch Switch2, the third switch Switch3, the fourth switch Switch4, the fifth switch Switch5, and a sixth switch Switch6.

In the first communication link 11, the first end of the first controller Node_A is communicatively connected to the first switch Switch1, the third switch Switch3 is communicatively connected to the first switch Switch1, the first switch Switch1 is communicatively connected to the second switch Switch2, the second switch Switch2 is communicatively connected to the fourth switch Switch4, and the second switch Switch2 is communicatively connected to the first end of the second controller Node_B.

In the second communication link 12, the second end of the first controller Node_A is communicatively connected to the third switch Switch3, the first switch Switch1 is communicatively connected to the third switch Switch3, the third switch Switch3 is communicatively connected to the fourth switch Switch4, the fourth switch Switch4 is communicatively connected to the second switch Switch2, and the fourth switch Switch4 is communicatively connected to the second end of the second controller Node_B.

In the third communication link 13, the first end of the second controller Node_B is communicatively connected to the second switch Switch2, the second switch Switch2 is communicatively connected to the fifth switch Switch5, the fifth switch Switch5 is communicatively connected to the sixth switch Switch6, and the fifth switch Switch5 is communicatively connected to a first end of the third controller Node_C.

In the fourth communication link 14, the second end of the second controller Node_B is communicatively connected to the fourth switch Switch4, the fourth switch Switch4 is communicatively connected to the sixth switch Switch6, the sixth switch Switch6 is communicatively connected to the fifth switch Switch5, and the sixth switch Switch6 is communicatively connected to a second end of the third controller Node_C.

As illustrated in FIG. 5, in the first communication link 11, the third switch Switch3 is communicatively connected to the first switch Switch1, the first switch Switch1 is communicatively connected to the second switch Switch2, and the second switch Switch2 is communicatively connected to the fourth switch Switch4. In the second communication link 12, the first switch Switch1 is communicatively connected to the third switch Switch3, the third switch Switch3 is communicatively connected to the fourth switch Switch4, and the fourth switch Switch4 is communicatively connected to the second switch Switch2. In the third communication link 13, the fourth switch Switch4 is communicatively connected to the second switch Switch2, the second switch Switch2 is communicatively connected to the fifth switch Switch5, and the fifth switch Switch5 is communicatively connected to the sixth switch Switch6. In the fourth communication link 14, the second switch Switch2 is communicatively connected to the fourth switch Switch4, the fourth switch Switch4 is communicatively connected to the sixth switch Switch6, the sixth switch Switch6 is communicatively connected to the fifth switch Switch5. The switches in the first communication link 11, the second communication link 12, the third communication link 13, and the fourth communication link 14 are connected sequentially, so that the source message sent by the master control unit of the intelligent vehicle can reach each of the switches in the first communication link 11, the second communication link 12, the third communication link 13 and the fourth communication link 14.

After the first communication link 11 and the second communication link 12 between the second controller Node_B and the first controller Node_A are established, when switch nodes (i.e., the first switch Switch1, the second switch Switch2, the third switch Switch3, and the fourth switch Switch4) in the first communication link 11 operate normally, and the sub-links in the first communication link 11 (i.e., a connecting path of two switches that are communicatively connected, a connecting path between the first switch Switch1 and the first controller Node_A, and a connecting path between the second controller Node_B and the second switch Switch2) operate normally, the second controller Node_B receives the source message sent by the first controller Node_A through the first communication link 11. When the switch nodes (i.e., the first switch Switch1, the second switch Switch2, the third switch Switch3, and the fourth switch Switch4) in the second communication link 12 operate normally, and the sub-links in the second communication link 12 (i.e., a connecting path of two switches that are communicatively connected, a connecting path between the third switch Switch3 and the first controller Node_A, and a connecting path between the second controller Node_B and the fourth switch Switch4) operate normally, the second controller Node_B receives the source message sent by the first controller Node_A through the second communication link 12. After the third communication link 13 and the fourth communication link 14 between the second controller Node_B and the third controller Node_C are established, when the switch nodes (i.e., the second switch Switch2, the fourth switch Switch4, the fifth switch Switch5, and the sixth switch Switch6) in the third communication link 13 operate normally, and the sub-links in the third communication link 13 (i.e., a connecting path of two switches that are communicatively connected, a connecting path between the fifth switch Switch5 and the third controller Node_C, and a connecting path between the second controller Node_B and the second switch Switch2) operate normally, the third controller Node_C receives the source message sent by the second controller Node_B through the third communication link 13. When the switch nodes (i.e., the second switch Switch2, the fourth switch Switch4, the fifth switch Switch5, and the sixth switch Switch6) in the fourth communication link 14 operate normally, and the sub-links in the fourth communication link 14 (i.e., a connecting path of two switches that are communicatively connected, a connecting path between the fourth switch Switch4 and the second controller Node_B, and a connecting path between the third controller Node_C and the sixth switch Switch6) operate normally, the third controller Node_C receives the source message sent by the second controller Node_B through the fourth communication link 14.

In addition, the first switch Switch1, the second switch Switch2, the third switch Switch3, and the fourth switch Switch4 in the first communication link 11 and the second communication link 12 are connected in different ways. If any of the switch nodes in the first communication link 11 is failed, and/or any sub-link in the first communication link 11 is failed, the second controller Node_B may receive the source message sent by the first controller Node_A through the second communication link 12. If any of the switch nodes in the second communication link 12 is failed, and/or any sub-link in the second communication link 12 is failed, the second controller Node_B may receive the source message sent by the first controller Node_A through the first communication link 11. Therefore, reliable transmission of the source message between the second controller Node_B and the first controller Node_A is realized.

Similarly, the second switch Switch2, the fourth switch Switch4, the fifth switch Switch5 and the sixth switch Switch6 in the third communication link 13 and the fourth communication link 14 are connected in different ways. If any of the switch nodes in the third communication link 13 is failed, and/or any of the sub-links in the third communication link 13 is failed, the third controller Node_C may receive the source message sent by the second controller Node_B through the fourth communication link 14. If any of the switch nodes in the fourth communication link 14 is failed, and/or any of the sub-links in the fourth communication link 14 is failed, the third controller Node_C may receive the source message sent by the second controller Node_B through the third communication link 13. Therefore, the reliable transmission of the source message between the third controller Node_C and the second controller Node_B is realized.

After the first communication link 11 and the second communication link 12 between the second controller Node_B and the first controller Node_A are established, and the third communication link 13 and the fourth communication link 14 between the third controller Node_C and the second controller Node_B are established, when the switch nodes in the first communication link 11 operate normally and the sub-links in the first communication link 11 operate normally, the second controller Node_B receives the source message sent by the first controller Node_A over the first communication link 11. When the switch nodes in the second communication link 12 operate normally and the sub-links in the second communication link 12 operate normally, the second controller Node_B receives the source message sent by the first controller Node_A over the second communication link 12. When the switch nodes in the third communication link 13 operate normally and the sub-links in the third communication link 13 operate normally, the third controller Node_C receives the source message sent by the second controller Node_B through the third communication link 13. When the switch nodes in the fourth communication link 14 operate normally and the sub-links in the fourth communication link 14 operate normally, the third controller Node_C receives the source message sent by the second controller Node_B through the fourth communication link 14.

In addition, the first switch Switch1, the second switch Switch2, the third switch Switch3, and the fourth switch Switch4 in the first communication link 11 and the second communication link 12 are connected in different ways. If any of the switch nodes in the first communication link 11 is failed, and/or any of the sub-links in the first communication link 11 is failed, the second controller Node_B may receive the source message sent by the first controller Node_A through the second communication link 12. If any of the switch nodes in the second communication link 12 is failed, and/or any of the sub-links in the second communication link 12 is failed, the second controller Node_B may receive the source message sent by the first controller Node_A through the first communication link 11. Therefore, the reliable transmission of the source message between the second controller Node_B and the first controller Node_A is realized. The second switch Switch2, the fourth switch Switch4, the fifth switch Switch5 and the sixth switch Switch6 in the third communication link 13 and the fourth communication link 14 are connected in different ways. If any of the switch nodes in the third communication link 13 is failed, and/or any of the sub-links in the third communication link 13 is failed, the third controller Node_C may receive the source message sent by the second controller Node_B through the fourth communication link 14. If any of the switch nodes in the fourth communication link 14 is failed, and/or any of the sub-links in the fourth communication link 14 is failed, the third controller Node_C may receive the source message sent by the second controller Node_B through the third communication link 13. Therefore, the reliable transmission of the source message between the third controller Node_C and the second controller Node_B is realized.

Therefore, paths for realizing the transmission of the source message between the third controller Node_C and the first controller Node_A include the first communication link 11 and the third communication link 13, the first communication link 11 and the fourth communication link 14, the second communication link 12 and the third communication link 13, and the second communication link 12 and the fourth communication link 14.

Optionally, the first controller Node_A includes at least a first Ethernet interface and a second Ethernet interface, the second controller Node_B includes at least the first Ethernet interface and the second Ethernet interface, and the third controller Node_C includes at least the first Ethernet interface and the second Ethernet interface.

Two ends of the first communication link 11 are electrically connected to the first Ethernet interface of the first controller Node_A and the first Ethernet interface of the second controller Node_B, respectively.

Two ends of the second communication link 12 are electrically connected to the second Ethernet interface of the first controller Node_A and the second Ethernet interface of the second controller Node_B, respectively.

Two ends of the third communication link 13 are electrically connected to the first Ethernet interface of the second controller Node_B and the first Ethernet interface of the third controller Node_C, respectively.

Two ends of the fourth communication link 14 are electrically connected to the second Ethernet interface of the second controller Node_B and the second Ethernet interface of the third controller Node_C, respectively.

By setting the first controller Node_A including at least the first Ethernet interface and the second Ethernet interface, the second controller Node_B including at least the first Ethernet interface and the second Ethernet interface, and the third controller Node_C including at least the first Ethernet interface and the second Ethernet interface, the source message can be send through two communication links when the first controller Node_A, the second controller Node_B and the third controller Node_C act as transmitting controllers, and the source message may be received through two communication links when the first controller Node_A, the second controller Node_B, and the third controller Node_C act as receiving controllers.

Optionally, the communication network is isolated by a virtual local area network to form the first communication link and the second communication link.

Optionally, the communication network implements the data transmission between the first controller and the second controller based on a redundant link network adaptation protocol.

In detail, the communication network is established between the first controller and the second controller, or the communication network is established between the first controller, the second controller and the third controller. Each of the first controller Node_A, the second controller Node_B, and the third controller Node_C includes a customized redundancy adaptation layer, an application layer, and a network layer. The customized redundancy adaptation layer provides an application programming interface (API) for the application layer, to facilitate network application development at the application layer. For example, to develop each functional module in the intelligent vehicle, the network layer is based on a user datagram protocol (UDP), and the adaptation layer realizes reliable transmission of data to solve the problem of unreliable UDP data transmission.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a..." does not exclude the presence of additional identical elements in the process, method, article or device that comprises the said element.

The foregoing are only specific implementations of the disclosure to enable those skilled in the art to understand or realize the disclosure. Various modifications to these embodiments will be apparent to those skilled in the art, and the general principles defined herein may be realized in other embodiments without departing from the spirit or scope of the disclosure. Therefore, the disclosure will not be limited to these embodiments described herein, but will be subject to the broadest scope consistent with the principles and novel features disclosed herein.

## Claims

1. An intelligent vehicle communication system, comprising: a first controller, a second controller, and a communication network; wherein
the communication network comprises a first communication link and a second communication link, the first communication link connects the first controller and the second controller, and the second communication link connects the first controller and the second controller; and
the first controller and the second controller perform data transmission through the first communication link and/or the second communication link.

2. The system of claim 1, wherein the communication network at least comprises a first switch, a second switch, a third switch and a fourth switch;
in the first communication link, a first end of the first controller is communicatively connected to the first switch, the first switch is communicatively connected to the second switch, the second switch is communicatively connected to the fourth switch, the fourth switch is communicatively connected to the third switch, and the second switch is communicatively connected to a first end of the second controller; and
in the second communication link, a second end of the first controller is communicatively connected to the third switch, the second switch is communicatively connected to the first switch, the first switch is communicatively connected to the third switch, the third switch is communicatively connected to the fourth switch, and the fourth switch is communicatively connected to a second end of the second controller.

3. The system of claim 2, wherein the communication network further comprises a fifth switch;
in the first communication link, the fourth switch is communicatively connected to the third switch through the fifth switch; and
in the second communication link, the second switch is communicatively connected to the first switch through the fifth switch.

4. The system of any one of claims 1-3, wherein the system further comprises a third controller; and
the communication network further comprises a third communication link and a fourth communication link, the third communication link connects the second controller and the third controller, and the fourth communication link connects the second controller and the third controller.

5. The system of claim 4, wherein the communication network at least comprises the first switch, the second switch, the third switch, the fourth switch, the fifth switch and a sixth switch;
in the first communication link, a first end of the first controller is communicatively connected to the first switch, the third switch is communicatively connected to the first switch, the first switch is communicatively connected to the second switch, the second switch is communicatively connected to the fourth switch, and the second switch is communicatively connected to a first end of the second controller;
in the second communication link, a second end of the first controller is communicatively connected to the third switch, the first switch is communicatively connected to the third switch, the third switch is communicatively connected to the fourth switch, the fourth switch is communicatively connected to the second switch, and the fourth switch is communicatively connected to a second end of the second controller;
in the third communication link, the first end of the second controller is communicatively connected to the second switch, the second switch is communicatively connected to the fifth switch, the fifth switch is communicatively connected to the sixth switch, and the fifth switch is communicatively connected to a first end of the third controller; and
in the fourth communication link, the second end of the second controller is communicatively connected to the fourth switch, the fourth switch is communicatively connected to the sixth switch, the sixth switch is communicatively connected to the fifth switch, and the sixth switch is communicatively connected to a second end of the third controller.

6. The system of any one of claims 1-5, wherein the first controller comprises at least a first Ethernet interface and a second Ethernet interface, and the second controller comprises at least a first Ethernet interface and a second Ethernet interface;
two ends of the first communication link are electrically connected to the first Ethernet interface of the first controller and the first Ethernet interface of the second controller, respectively; and
two ends of the second communication link are electrically connected to the second Ethernet interface of the first controller and the second Ethernet interface of the second controller, respectively.

7. The system of any one of claims 4-6, wherein the first controller comprises at least a first Ethernet interface and a second Ethernet interface, the second controller comprises at least a first Ethernet interface and a second Ethernet interface, and the third controller comprises at least a first Ethernet interface and a second Ethernet interface;
two ends of the first communication link are electrically connected to the first Ethernet interface of the first controller and the first Ethernet interface of the second controller, respectively;
two ends of the second communication link are electrically connected to the second Ethernet interface of the first controller and the second Ethernet interface of the second controller, respectively;
two ends of the third communication link are electrically connected to the first Ethernet interface of the second controller and the first Ethernet interface of the third controller, respectively; and
two ends of the fourth communication link are electrically connected to the second Ethernet interface of the second controller and the second Ethernet interface of the third controller, respectively.

8. The system of any one of claims 1-7, wherein the communication network is isolated by a virtual local area network to form the first communication link and the second communication link.

9. The system of any one of claims 1-7, wherein the communication network implements data transmission between the first controller and the second controller based on a redundant link network adaptation protocol.
